# EUROPÄISCHE PATENTSCHRIFT

(11) **EP 1 240 232 B1**
(45) Veröffentlichungstag und Bekanntmachung des Hinweises auf die Patenterteilung: **09.02.2005**
(21) Anmeldenummer: 00971413.0
(22) Anmeldetag: 03.11.2000
(51) Int. Cl.: C08G 64/30

(54) **VERFAHREN ZUR HERSTELLUNG VON POLYCARBONAT**
METHOD FOR PRODUCING POLYCARBONATE
PROCEDE POUR LA PRODUCTION DE POLYCARBONATE

(30) Priorität: 15.11.1999 DE 19954787
(43) Veröffentlichungstag der Anmeldung: 18.09.2002
(73) Patentinhaber: Bayer MaterialScience AG, 51368 Leverkusen (DE)
(72) Erfinder: PREIN, Michael, 2930 Brasschaat (BE); HUCKS, Michael, 46519 Alpen (DE); LANZE, Rolf, 47804 Krefeld (DE)
(86) Internationale Anmeldenummer: PCT/EP2000/010828
(87) Internationale Veröffentlichungsnummer: WO 2001/036511

(56) Entgegenhaltungen:
- EP-A- 0 360 578
- EP-A- 0 719 814

## Beschreibung

Die vorliegende Erfindung betrifft ein Verfahren zur Herstellung von Polycarbonat durch Umesterung von Kohlensäureestern mit Dihydroxyverbindungen, wobei 10 bis 100 mol-% der insgesamt eingesetzten molaren Menge an Dihydroxyverbindungen Bisphenol A ist und dass das Bisphenol A als Mischung aus Bisphenol A und Phenol eingesetzt wird, wobei der Anteil des Phenols in der Mischung aus Bisphenol A und Phenol 5 bis 85 Gew.-%, bezogen auf die Masse des Bisphenol A, ist.

Die Herstellung von Polycarbonat durch Umesterung von Kohlensäureestern mit Dihydroxyverbindungen ist bekannt. Das Verfahren ist beispielsweise beschrieben in der Monographie von H. Schnell, Chemistry and Physics of Polycarbonate, Polymer Reviews, Volume 9, John Wiley and Sons, 1964, Seite 44-51. Das Verfahren ist auch beschrieben in Encyclopedia of Polymer Sience, Volume 10, 1969.

Das Verfahren zur Herstellung von Polycarbonat durch Umesterung ist insbesondere geeignet, um das Homopolycarbonat von Bisphenol A (BPA) herzustellen. Hierzu wird Bisphenol A mit Kohlensäureestern, bevorzugt Diphenylcarbonat, umgeestert. Das Verfahren zur Herstellung von Polycarbonat durch Umesterung ist auch geeignet, um Copolycarbonate auf der Basis von Bisphenol A und weiteren Dihydroxyverbindungen als Copolymerisationspartner herzustellen. Hierzu werden Bisphenol A und die weiteren Dihydroxyverbindungen mit Kohlensäureestem, bevorzugt Diphenylcarbonat, umgeestert.

Bei der Herstellung von Polycarbonat durch Umesterung werden die Reaktionspartner (Dihydroxyverbindungen und Kohlensäureester und gegebenenfalls weitere Hilfs- und Zusatzstoffe wie z.B. Verzweiger) in einer meist mehrstufigen Reaktion bevorzugt in der Schmelze, bevorzugt unter Zusetzung eines Umesterungskatalysators oder einer Kombination von mehreren Umesterungskatalysatoren unter Abspaltung einer Hydroxyverbindung aus dem Kohlensäureester umgesetzt. Falls als Kohlensäureester Diphenylcarbonat eingesetzt wird, wird als Hydroxyverbindung Phenol abgespalten. Durch Variation von Temperatur und Druck über der Reaktionsmischung wird das Reaktionsgleichgewicht stetig verschoben. Durch fortgesetzte Aufkondensation können auf diesem Wege farbhelle, lösungsmittelfreie Polycarbonate erhalten werden können.

Für das Umesterungsverfahren zur Herstellung von Polycarbonaten ist eine Vielzahl von Katalysatoren, Ausführungsformen des Verfahrens und eingesetzten Apparaten beschrieben.

Das Umesterungsverfahren zur Herstellung von Polycarbonaten hat den Vorteil, dass keine Lösungsmittel und kein Phosgen erforderlich sind, wie dies im sogenannten Phasengrenzflächenverfahren zur Herstellung von Polycarbonaten erforderlich ist. Damit ermöglicht das Umesterungsverfahren zur Herstellung von Polycarbonaten eine kostengünstige und umweltfreundliche Herstellung von Polycarbonat, die zudem den Vorteil hat, frei von Chlor zu sein.

Das Verfahren zur Herstellung von Polycarbonat durch Umesterung stellt im allgemeinen hohe Anforderungen an die Reinheit der Ausgangsstoffe und der verwendeten Hilfsstoffe. Auch die spezifische Darreichungsform der Ausgangsstoffe und der Hilfsstoffe kann das Verfahren und die Qualität des Produktes Polycarbonat beeinflussen.

Beispielsweise lehrt DE-A 2 439 552, dass der Einsatz von Bisphenol A und Diphenylcarbonat als Schmelzen, die als Reinstoffe nicht den festen Zustand durchlaufen haben, zu verbesserten Polycarbonatproduktqualitäten führt.

Auch der Einfluss unterschiedlicher Dosierformen des verwendeten Katalysators wurde untersucht. So beschreibt beispielsweise EP-A 0 719 814 eine Ausführungsform, wobei ein Alkalikatalysator zunächst in einer Adduktmischung aus Bisphenol und Phenol gelöst wird. Anschließend wird das Phenol entfernt und die entstehende Lösung des Katalysators im Bisphenol mit einem geeigneten Kohlensäureester zur Reaktion gebracht.

Die Herstellung des hochreinen Bisphenol A, das für die Herstellung von Polycarbonat nach dem Umesterungsverfahren erforderlich ist, kann beispielsweise aus Phenol und Aceton unter saurer Katalyse wie in DE-A 3 727 641 oder im US-A 2 858 342 beschrieben erfolgen. Der Zusatz eines Cokatalysators ist möglich.

Nach dem üblichen Verfahren zur Herstellung von Bisphenol A wird das Bisphenol A nachdem die Reaktionsmischung aus Aceton und Phenol die Reaktionszone durchlaufen hat, zunächst als Lösung in der Reaktionsmischung erhalten. Die Reaktionsmischung besteht dabei hauptsächlich aus Phenol und Bisphenol A. Daneben enthält die Reaktionsmischung auch typischerweise bei der Herstellung von Bisphenol A anfallende Nebenprodukte, wie z.B. o,p-Bisphenol A, methylierte Hydroxyphenylindanole, methylierte Hydroxyphenylchromanole, p-Isopropenylphenol und dessen Dimere, Trimere und Oligomere, sowie höhere Kondensate mit drei oder mehr aromatischen Kernen.

Zur Reinigung des Bisphenol A wird typischerweise durch Kristallisation des Bisphenol A aus der Reaktionsmischung Bisphenol A in Form eines ungefähr äquimolaren Aduktes mit Phenol erhalten. Anschließend wird das Bisphenol A weiter gereinigt. Diese weitere Reinigung kann z.B. durch Umkristallisation aus Wasser oder aus geeigneten organischen Lösungsmitteln oder deren Mischungen erfolgen, wie dies z.B. in US-A 4 354 046 oder in EP-A 0 626 408 beschrieben ist. Ebenfalls beschrieben ist die Reinigung und Abtrennung von Phenol durch Schmelzekristallisation, Desorption oder durch mehrstufige Destillation, beispielsweise in EP-A 0 785 181 und EP-A 0 676 626.

Durch den Einsatz der genannten Reinigungsverfahren oder durch eine Kombination mehrerer der genannten Reinigungsverfahren erfolgt die Abtrennung unerwünschter Nebenprodukte aus dem Herstellungsprozess des Bisphenol A und die Abtrennung von Phenol aus dem primär isolierten Addukt aus Bisphenol A und Phenol. Durch hohen technischen Aufwand ist es hierdurch möglich, Bisphenol A fast gänzlich von den in der Herstellung typischerweise entstehenden Nebenprodukten und von Phenol zu reinigen und in einer Reinheit von bis zu über 99,9 % zu erhalten.

Das so hergestellte Bisphenol A kann in Form von Pulver, Schuppen oder Prills gelagert und verarbeitet werden oder in Natronlauge als Natriumsalz gelöst werden, um es zur Herstellung von Polycarbonat nach dem Phasengrenzflächeverfahren zu nutzen. Das so hergestellte hochreine Bisphenol A kann auch als Ausgangsstoff für die Herstellung von Polycarbonaten nach dem Umesterungsverfahren dienen.

Der vorliegenden Erfindung liegt die Aufgabe zugrunde, ein Verfahren zur Herstellung von Polycarbonat durch Umesterung von Kohlensäureestern mit Dihydroxyverbindungen, die einen Anteil von mindestens 10 mol-% Bisphenol A enthalten, zur Verfügung zu stellen, ohne dass dieses Verfahren die aus dem Stand der Technik bekannten, aufwendigen Reinigungsverfahren des Bisphenol A erfordert.

Die erfindungsgemäße Aufgabe wird gelöst durch ein Verfahren zur Herstellung von Polycarbonat durch Umesterung von Kohlensäureestern mit Dihydroxyverbindungen die mindestens 10 mol-% Bisphenol A enthalten, wobei das Bisphenol A nicht wie aus dem Stand der Technik bekannt als Reinstoff, z.B. in Form von Pulver, Schuppen, Prills oder als Schmelze eingesetzt wird, sondern wobei das Bisphenol A als Mischung mit Phenol eingesetzt wird.

Diese Lösung der erfindungsgemäßen Aufgabe ist überraschend, da sie es ermöglicht, das Bisphenol A durch das Vermeiden von Reinigungsschritten bei der Herstellung des Bisphenol A wesentlich einfacher und kostengünstiger zur Verfügung zu stellen, in dem die bei der Bisphenol A-Herstellung anfallende Mischung aus Phenol und Bisphenol A direkt zur Herstellung von Polycarbonat eingesetzt wird. Der bekannte Stand der Technik geht davon aus, dass dies nicht möglich sein sollte, sondern dass das Bisphenol A durch aufwendige Reinigungsverfahren in reiner Form zur Verfügung gestellt werden muss, um es in einem Umesterungsverfahren zur Herstellung von Polycarbonat einsetzen zu können.

Gegenstand der Erfindung ist somit ein Verfahren zur Herstellung von Polycarbonat durch Umesterung von Kohlensäureestern mit Dihydroxyverbindungen, dadurch gekennzeichnet, dass 10 bis 100 mol-% der insgesamt eingesetzten molaren Menge an Dihydroxyverbindungen Bisphenol A ist und dass das Bisphenol A als Mischung aus Bisphenol A und Phenol eingesetzt wird, wobei der Anteil des Phenols in der Mischung aus Bisphenol A und Phenol 5 bis 85 gew.% bezogen auf die Masse des Bisphenols A, ist. Bevorzugt werden Mischungen mit 5 bis 85 Gew.-%, besonders bevorzugt Mischungen mit 10 bis 70 Gew.-%, Phenol bezogen auf die Masse des Bisphenol A eingesetzt.

Das erfindungsgemäße Verfahren hat zahlreiche Vorteile. Es liefert Polycarbonat, welches in seiner Qualität dem Polycarbonat, das nach bekanntem Verfahren hergestellt wird, mindestens gleichwertig ist. Insbesondere hat das nach dem erfindungsgemäße Verfahren hergestellte Polycarbonat gute optische Eigenschaften, wie z.B. hohe Transparenz und gute mechanische Eigenschaften wie z.B. hohe Festigkeit und Zähigkeit.

Durch den Wegfall bisher für erforderlich gehaltene Reinigungsschritte in der Bisphenol A-Herstellung ist das erfindungsgemäße Verfahren technisch einfacher und damit kostengünstiger sowie umweltschonender.

Bei der Produktion von Bisphenol A nach den aus dem Stand der Technik bekannten Verfahren fallen in der Regel an einer Stelle im Produktionsprozess Mischungen aus Bisphenol A und Phenol an, die anschließend gemäß dem Stand der Technik durch aufwendige Verfahrensschritte vom Phenol befreit werden, um hochreines Bisphenol A zu erhalten. Zusätzlich zum hierbei erforderlichen technischen Aufwand wird das Bisphenol A hierbei, insbesondere beim Einsatz von Desorption oder destillativer Techniken zur Phenolentfemung, thermisch belastet. Dies kann zur Entstehung von unerwünschten gefärbten Begleitstoffen führen. Diesen Nachteil. hat das erftndungsgemäße Verfahren nicht. Dies wird aus den Angaben in Tabelle 1 deutlich. Die Aufstellung enthält die Siedepunkte und Schmelzpunkte von Bisphenol A-Phenol-Mischungen. Es wird deutlich, dass Siede- und Schmelzpunkte der Mischungen bei geringen Phenolgehalten stark ansteigen. Dies bedeutet, dass zur Entfernung letzter Phenolreste z.B. durch Destillation oder Desorption überproportional hohe Temperaturen benötigt werden.

**Tabelle 1**

| Siede- und Schmelzpunkte von Bisphenol A-Phenol-Mischungen | | | | | |
|---|---|---|---|---|---|
| Gew.-% Bisphenol A | Gew.-% Phenol | Anteil Phenol (%)¹⁾ | Siedepunkt bei 150 mbar in °C | Siedepunkt bei 50 mbar in °C | Schmelzpunkt in °C |
| 99,95 | 0,05 | 0,05 | >320 | >300 | 156,8 |
| 99,90 | 0,10 | 0,10 | 315 | 280 | 156,7 |
| 95,00 | 5,00 | 5,26 | 205 | 170 | 152 |
| 90,0 | 10,0 | 11,11 | 175 | 142 | 147 |
| 70,0 | 30,0 | 42,86 | 142 | 114 | 117 |
| 60,0 | 40,0 | 66,67 | 136 | 110 | 98 |

| | | | | | |
|---|---|---|---|---|---|
| ¹⁾ Berechnet als (Gew.-% Phenol dividiert durch Gew.-% Bisphenol A) mal 100%. | | | | | |

Durch den erfindungsgemäßen Einsatz von Mischungen aus Bisphenol A und Phenol wird sowohl die Temperaturbelastung des Bisphenol A, als auch die Verweilzeit in Apparaten zur Phenolentfemung reduziert. Hierbei ist zu berücksichtigen, dass mit abnehmenden Phenolgehalten in den Mischungen aus Phenol und Bisphenol A der Dampfdruck des Phenols über der Mischung ebenfalls stark abnimmt, so dass die Entfernung von Phenol aus einer Mischung von Bisphenol A und Phenol mit geringen Phenolgehalten hohe Temperaturen und lange Verweilzeiten erfordert. Hohe Temperaturen und lange Verweilzeiten können beispielsweise zu unerwünschten farbigen Nebenprodukten führen. Diesen Nachteil hat das erfindungsgemäße Verfahren nicht.

Da bei der Herstellung von Polycarbonat nach dem Umesterungsverfahren aus Kohlensäureestem und Dihydroxyverbindungen in jedem Fall Hydroxyverbindungen aus den Kohlensäureestern abgespalten und abgetrennt werden müssen, sind die zur Abtrennung dieser Hydroxyverbindungen erforderlichen technischen Anlagen in den entsprechenden Anlagen zur Herstellung von Polycarbonat durch Umesterung in jedem Falle vorhanden. Die erfindungsgemäße Verwendung von Mischungen aus Phenol und Bisphenol A bei der Herstellung von Polycarbonat durch Umesterung führt demgemäß zu einer Reduktion des Aufwandes und der Kosten der Bisphenol A-Reinigung bei der Bisphenol A-Herstellung, ohne dass der technische Aufwand bei der Umesterung gesteigert werden würde.

Ein weiterer Vorteil des erfindungsgemäßen Verfahrens zur Herstellung von Polycarbonat besteht darin, dass durch den Einsatz von Mischungen aus Bisphenol A und Phenol als Rohstoffe eine bessere Qualität des Polycarbonats verglichen mit einem Verfahren zur Herstellung von Polycarbonat durch Umesterung, das reines Bisphenol A einsetzt, erhalten werden kann. Dies wird verständlich, wenn man berücksichtigt, dass der Rohstoff, wie in technischen Anlagen üblich, normalerweise kontinuierlich als Schmelze dosiert wird. Durch die Absenkung des Schmelzpunktes der Mischung aus Bisphenol A und Phenol aufgrund des Phenolanteiles gegenüber dem Schmelzpunkt von reinem Bisphenol A (vergleiche Tabelle 1), kann die Lagerung der Schmelze in flüssigem Zustand bei niedrigerer Temperatur erfolgen. Beispielsweise wird die Schmelzetemperatur von 156,8°C für reines Bisphenol A auf 147°C bei einem Phenolanteil von 11 % bezogen auf Bisphenol A und auf 98°C bei einem Phenolanteil von 67 % bezogen auf Bisphenol A abgesenkt. Dies bedingt eine geringere Temperaturbelastung der Mischungen aus Bisphenol A und Phenol, beispielsweise beim Verweilen in Rohrleitungen und Puffertanks. Dies resultiert in einer verbesserten Qualität, ausgedrückt z.B. in einer besseren Farbzahl, beispielsweise des Yellowness-Index (Y.I.) des erfindungsgemäß hergestellten Polycarbonats, verglichen mit Polycarbonat, das unter Verwendung einer Schmelze von reinem Bisphenol A hergestellt wird.

Erfindungsgemäß können beliebige Kohlensäureester eingesetzt werden. Bevorzugt ist Diphenylcarbonat.

Erfindungsgemäß beträgt der Anteil des Bisphenol A an der insgesamt eingesetzten molaren Menge an Dihydroxiverbindungen 10 bis 100 mol-%, bevorzugt 20 bis 100 mol-%, besonders bevorzugt 40 bis 100 mol-% und ganz besonders bevorzugt ist er 100 mol-%.

Erfindungsgemäß ist der Phenolanteil an der Mischung aus Phenol und Bisphenol A 5 bis 85 Gew.-%, bevorzugt 10 bis 70 Gew.-% bezogen auf die Gesamtmasse an eingesetztem Bisphenol A.

Die Mischung aus Phenol und Bisphenol A kann in Form einer rein physikalischen Mischung in Form von Mischkristallen oder in Form eines Adduktes oder in einer anderen Form vorliegen. Die Mischung kann fest oder flüssig sein. Sie kann z.B. eine Schmelze sein. Bevorzugt ist eine Schmelze, die direkt zur Herstellung von Polycarbonat nach dem Umesterungsverfahren eingesetzt werden kann.

In der erfindungsgemäßen Mischung aus Phenol und Bisphenol A können auch die bei der Herstellung von Bisphenol A typischerweise entstehende Nebenprodukte, beispielsweise o,p-Bisphenol A, methylierte Hydroxyphenylindanole, methylierte Hydroxyphenylcromanole, p-Isopropenylphenol oder dessen Dimere oder dessen Trimere oder dessen Oligomere, sowie höhere Kondensate mit drei oder mehr aromatischen Kernen vorhanden sein. Bevorzugt sind diese oder andere weitere Stoffe außer Bisphenol A und Phenol in einer Menge von 0,05 bis 1,0 Gew.-% bezogen auf Bisphenol A, besonders bevorzugt in einer Menge von 0,1 bis 0,5 Gew.-% bezogen auf Bisphenol A, in der Mischung aus Bisphenol A und Phenol vorhanden.

Die erfindungsgemäße Mischung aus BPA, Phenol und gegebenenfalls Nebenprodukten aus der BPA-Herstellung stammt bevorzugt aus der Reaktion von Phenol und Aceton in einem Molverhältnis von mindestens 5:1 (Phenol:Aceton) unter saurer Katalyse, gegebenenfalls unter Zugabe eines Cokatalysators und anschließender Durchführung von Aufarbeitungsschritten, die geeignet sind die beschriebene Mischung entstehen zu lassen. Derartige Schritte sind beispielsweise Kristallisation, Umkristallisation aus organischen oder wässrigen Lösungsmitteln oder deren Mischungen, Schmelzekristallisation, Desorption, oder Destillation.

Als saure Katalysatoren können beispielsweise saure vemetzte sulfonierte Polystyrole, Mineralsäuren wie z.B.Schwefelsäure oder Chlorwasserstoff sowie deren wässrige Lösungen oder saure anorganische Feststoffe wie z.B. Zeolithe oder Metalloxide zum Einsatz kommen.

Als Cokatalysatoren können beispielsweise organische oder anorganische Schwefelverbindungen wie Schwefelwasserstoff, Alkylmercaptane oder Thioether eingesetzt werden.

Die BPA-Herstellung kann kontinuierlich oder diskontinuierlich durchgeführt werden. Der Reaktionsstrom kann aus frischem Aceton und Phenol bestehen. Alternativ kann ein Teil des nach der Abtrennung von BPA anfallenden Reaktionsgemisches mit Aceton und Phenol ergänzt und an den Beginn der Reaktionszone zurückgefahren werden.

Durch die oben beschriebenen Ausführungsformen der Reaktion zwischen Aceton und Phenol erhält man ein Gemisch aus BPA, Phenol, Wasser, gegebenenfalls nicht umgesetzem Aceton und Nebenprodukten mit einem Phenolanteil von bevorzugt über 55 Gew.-% bezogen auf die Gesamtmasse und einem Nebenproduktanteil von mehr als 1,0 Gew.-% bezogen auf das enthaltene BPA.

Die folgenden Aufarbeitungsschritte können durchgeführt werden, um aus dem oben beschriebenen Gemisch die erfindungsgemäße Mischung aus BPA, Phenol und optional Nebenprodukten aus oben genannter Reaktion zur Herstellung von Bisphenol A zu erhalten: Kristallisation aus der Produktrnischung und anschließende Filtration, destillative Abtrennung von Aceton und/oder Wasser, Umkristallisation aus geeigneten organischen Lösungsmitteln oder deren Mischungen oder Emulsionen mit Wasser, Schmelzekristallisation, teilweise destillative Abtrennung von Phenol, teilweise oder vollständige destillative Abtrennung von Nebenprodukten, teilweise Phenolentfemung durch Desorption, teilweise Phenolentfernung aus BPA-Phenol-Mischungen durch Behandeln mit Wasser oder geeigneten organischen Lösungsmitteln. Ebenfalls erfindungsgemäß möglich, ist das Einbringen von Phenol an einer Stelle der hier beschriebenen Aufarbeitungschritte zusätzlich zu der Phenolmenge, die in den Reaktionsschritt zwischen Aceton und Phenol eingebracht wird, beispielsweise zum Waschen der Zwischen- oder Endprodukte der genannte Aufarbeitungsschritte oder zur Bildung von Adduktkristallen aus BPA und Phenol durch Vermischen von BPA mit Phenol.

Die beschriebenen Verfahrensschritte können einzeln, wiederholt oder kombiniert in beliebiger Reihenfolge durchgeführt werden. Ebenso können Produkte aus den beschriebenen Aufarbeitungsschritten in beliebigen Mengenverhältnissen vereinigt werden bis eine Mischung bestehend aus BPA, Phenol und optional oben beschriebenen Nebenprodukten aus dem Reaktionsschritt zur Herstellung von Bisphenol A erhalten wird mit einem Phenolgehalt von 5 bis 85 Gew.-%, bevorzugt 10 bis 70 Gew.-%, bezogen auf die Masse BPA und einem Summenanteil der Nebenprodukte von 0,05 bis 1,0 Gew.-%, bevorzugt 0,1 bis 0,5 Gew.-%, bezogen aufdas enthaltene BPA.

Die derart hergestellte Mischung aus BPA, Phenol und optional Nebenprodukten wird bevorzugt, gegebenenfalls zusammen mit weiteren Dihydroxiverbindungen, durch Umesterung mit geeigneten Kohlensäureestern unter Abspaltung der Hydroxykomponente des Kohlensäureesters in an sich bekannter Weise in hochmolekulares, farbhelles Polycarbonat überführt. Gemäß diesem Umesterungsverfahren, das bevorzugt in der Schmelze durchgeführt wird, werden aus bevorzugt aromatischen Dihydroxiverbindungen oder Mischungen verschiedener, bevorzugt aromatischer Dihydroxiverbindungen, Kohlensäureestern und gegebenenfalls Verzweigern, Kettenabbrechern und weiteren Hilfs- und Zusatzstoffen Polycarbonate oder Copolycarbonate hergestellt. Die erfindungsgemäße Mischung aus Bisphenol A und Phenol kann hierbei als Feststoff oder als Schmelze in das Verfahren eingebracht werden.

Die Reaktion kann durch Katalysatoren, die bevorzugt aus den folgenden Substanzklassen ausgewählt werden, oder durch eine Kombination mehrerer Katalysatoren die bevorzugt aus den folgenden Substanzklassen ausgewählt werden, beschleunigt werden: basische, stickstoffhaltige Verbindungen, Ammoniumsalze, basische, phosphorhaltige Verbindungen, Phosphoniumsalze, organische Säuren, basische, neutrale oder saure Salze von Metallen der Alkali-, oder Erdalkaligruppe des Periodensystems. Die Katalysatoren können als Reinstoffe oder als Lösungen eingebracht werden.

In einer typische Ausführungsform der Reaktion wird die erfindungsgemäße Mischung des Bisphenol A und Phenol mit 0,9 bis 1,5 mol Diphenylcarbonat pro mol BPA bei Temperaturen von 0°C bis 350°C und Drücken von 2 bar bis 0,01 mbar umgesetzt. Tetraphenylphosphoniumphenolat in Mengen von 10⁻¹ mol bis 10⁻⁸ mol, vorzugsweise in Mengen von 10⁻³ mol bis 10⁻⁷ mol pro mol BPA und optional Natriumphenolat in Mengen von von 10⁻³ mol bis 10⁻⁹ mol, vorzugsweise in Mengen von 10⁻⁵ mol bis 10⁻⁸ mol pro mol BPA werden als Umesterungskatalysatoren eingesetzt.

Weitere Einzelheiten des Schmelzeumesterungsverfahren zur Herstellung von Polycarbonat sind bekannt. Siehe beispielsweise Hermann Schnell, Chemistry and Physics of Polycarbonates, Polymer Reviews, Vol. 9, 1964, S. 44-51, DE-A 1 031 512, US-A 3 022 272, US-A 5 340 905 und US-A 5 399 659.

Von den dort beschriebenen Verfahren zur Herstellung von hochmolekularem Polycarbonat aus reinem BPA und geeigneten Kohlensäureestern unterscheidet sich das erfindungsgemäße Verfahren dadurch, dass durch Verwendung der erfindungsgemäßen Mischungen aus BPA und Phenol eine entsprechend größere Menge an Phenol abgetrennt werden muss, was durch entsprechende Dimensionierung der Apparate zur Phenolentfemung sichergestellt wird. Bei Verwendung von Mischungen mit geringen Phenolgehalten, beispielsweise weniger als 10 Gew.-%, ist aufgrund der geringfügigen Menge häufig überhaupt keine Änderung der Dimensionierung nötig.

Die Reaktion der aromatischen Dihydroxyverbindungen und der Kohlensäureester zum Polycarbonat kann gemäß des erfindungsgemäßen Verfahrens diskontinuierlich oder kontinuierlich durchgeführt werden. Die kontinuierliche Durchführung ist bevorzugt. Die Reaktion kann beispielsweise in Rührkesseln, Dünnschichtverdampfen, Fallfilmverdampfen, Rührkesselkaskaden, Extrudern, Knetern, einfachen Scheibenreaktoren und Hochviskosscheibenreaktoren durchgeführt werden.

Die Polycarbonate des erfindungsgemäßen Verfahrens sollen bevorzugt mittlere Gewichtsmolmassen M_{w} von 18 000 bis 200 000 g/mol vorzugsweise 19 000 bis 60 000 g/mol haben, ermittelt durch Messung der relativen Lösungsviskosität in Dichlormethan oder in Mischungen gleicher Gewichtsmengen Phenol/o-Dichlorbenzol geeicht durch Lichtstreuung.

Zur Begrenzung der mittleren Gewichtsmolmassen M_{w} der Polymeren können in bekannter Weise Molmassenregler, wie beispielsweise Alkylphenole, in geeigneten Mengen eingesetzt werden, wie dies beispielsweise in EP-A 0 360 578 beschrieben ist.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren, Fließhilfsmittel, Entformungsmittel, Brandschutzmittel, Pigmente, fein zerteilte Mineralien, Faserstoffe, z.B. Alkyl- und Arylphosphite, -phosphate, -phosphane, Säuren, Epoxide, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane, Polystyrol. Dadurch entstehen sogenannte Polymerblends.

Der Zusatz dieser Stoffe erfolgt vorzugsweise auf herkömmlichen Aggregaten zum fertigen Polycarbonat, kann jedoch, je nach den Erfordernissen, auch auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. Siloxanblöcken mit OH-Endgruppen, aromatische und aliphatische Polyester mit OH- und Carbonsäure-Endgruppen, Polyphenylensulfid-Blöcke mit OH-Endgruppen, Polyphenylenoxid-Blöcke mit OH-Endgruppen.

Die erfindungsgemäß hergestellten Polycarbonate eignen sich für die üblichen Anwendungsgebiete, also z.B. in der Elektrotechnik, im Bausektor und im Kraftfahrzeugbau, z.B. als Trägermaterial für Datenspeicher, für Stegplatten zur Abdeckung im Baubereich oder als Gehäusematerial von elektronischen Geräten.

Nach dem erfindungsgemäßen Verfahren wird hochmolekulares, farbhelles und lösungsmittelfreies Polycarbonat (Gewichtsmittel der Molmasse bevorzugt von 12 000 bis 50 000 g/mol) erhalten, das das gleiche oder ein besseres Eigenschaftsprofil aufweist als Polycarbonat, das unter Einsatz von reinem BPA erhalten wird. Durch die erfindungsgemäßc Benutzung von BPA, das Phenol und optional Nebenkomponenten aus der BPA-Herstellung enthält, kann der technische Aufwand zur Reinigung des BPA begrenzt werden, und es können auf einfachem Wege farbhelle Produkte erhalten werden.

Zur erfindungsgemäßen Herstellung von Copolycarbonaten können Mischungen der erfindungsgemäßen Mischung aus Phenol und BPA mit anderen Dihydroxyverbindungen verwendet werden. Andere Dihydroxyverbindungen sind beispielsweise:
4,4'Dihydroxydiphenyl,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
α,α-Bis-(4-hydroxyphenyl)-m-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyi)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α-Bis-(3,5-dimethyl-4-hydroxyphenyl)-p-diisopropylbenzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-1-phenyl-ethan,
2,2-Bis-(3,5-dimethyl-4-hydroxyphenyl)-2-phenyl-ethan,
2,2-Bis-(4-hydroxyphenyl)-2,2-diphenyl-ethan,
9,9-Bis-(4-hydroxyphenyl)-fluoren,
9,9-Bis-(3,5-dimethyl-4-hydroxyphenyl)-fluoren.

Besonders bevorzugte andere Dihydroxyverbindungen sind:
2,2-Bis-(3,5-dimethyl-4-hydroxyphenyl)-propan,
1,1-Bis-(4-hydroxyphenyl)-cyclohexan,
1,1-Bis-(4-hydroxyphenyl)-1-phenyl-ethan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-4-methylcyclohexan,
9,9-Bis-(3,5-dimethyl-4-hydroxyphenyl)-fluoren.

### Beispiele

Die folgenden Beispiele zeigen die Vorteilhaftigkeit des erfindungsgemäßen Vorgehens. Die Erfindung ist nicht auf die Beispiele beschränkt. Durch unterschiedlich aufwendige Aufarbeitungsschritte wurden die BPA/Phenol-Proben 1 bis 5 erzeugt. Hierbei wurde bei den Proben 1,2,3 durch Verzicht auf vollständige Phenolentfernung eine vereinfachte Aufarbeitung gewählt. Die so erzeugten Proben wurden nach einem Standardverfahren durch Schmelzeumesterung in hochmolekulares Polycarbonat überführt (Beispiele 1 bis 4, Vergleichsbeispiele 1, 2). Die Ergebnisse in Tabelle 3 zeigen, dass durch die aufwendige Phenolentfernung keine Verbesserung der PC-Produktqualität erzielt wird.

Der positive Effekt des erfindungsgemäßen Vorgehens bezüglich der Lagerstabilität zeigt sich in den Beispielen 5, 6 gegenüber Vergleichsbeispiel 3. Durch Lagerung von phenolhaltigen und phenolfreien BPA-proben knapp oberhalb ihres Schmelzpunktes wurde das Verweilen des Rohstoffs zur PC-Herstellung nach dem Umesterungsverfahren in Rohrleitungen oder Puffertanks simuliert. Durch Verwendung von phenolhaltigen Mischungen wurde im Anschluss an die Schmelzeumesterung mit Diphenylcarbonat Polycarbonat erhalten, das bezüglich relevanter Qualitätsgrößen (Viskosität, Yellowness Index) besser ist als bei der Verwendung von phenolfreiem BPA.

### Folgende BPA-Proben wurden in den Beispielen eingesetzt:

**BPA-Probe 1 (für die Beispiele 1 und 2):** Aus der technischen Herstellung von BPA aus Phenol und Aceton an sauren Ionentauschern wurde nach Kristallisation eines BPA-Phenol-Adduktes eine Probe der in Tabelle 1 angegebenen Zusammensetzung erhalten.

**BPA-Probe 2 (für Beispiel 3):** Durch partielles Abdestillieren von Phenol aus der BPA-Probe 1 bei 170°C und 180 mbar wurde Probe 2 erhalten.

**BPA-Probe 3 (für Beispiel 4):** Durch Umkristallisation der BPA-Probe 1 aus Phenol wurde Probe 3 erhalten.

**BPA-Probe 4 (für Vergleichsbeispiel 1)**: Durch Desorption von Phenol aus der BPA-Probe 1 mit Stickstoff bei 190°C und anschließende zweistufige Destillation wurde Probe 4 erhalten.

**BPA-Probe 5 (für Vergleichsbeispiel 2)**: Durch zweimalige Umkristallisation von der BPA-Probe 1 aus aus Toluol und anschließende Trocknung bei 120°C und 5 mbar wurde Probe 5 erhalten.

**BPA-Probe 6 (für Beispiel 5):** Eine geschmolzene Probe von BPA-Probe 1 (Fp 99°C) wurde 4 h bei 105°C als Schmelze gelagert und anschließend auf Raumtemperatur gekühlt.

**BPA-Probe 7 (für Beispiel 6):** Eine geschmolzene Probe von BPA-Probe 2 (Fp 136°C) wurde 4 h bei 140°C als Schmelze gelagert, anschließend auf Raumtemperatur gekühlt.

**BPA-Probe 8 (für Vergleichsbeispiel 3):** Eine geschmolzene Probe von BPA-Probe 4 (Fp 156°C) wurde 4 h bei 160°C als Schmelze gelagert und anschließend auf Raumtemperatur gekühlt.

| Zusammensetzung der Proben 1 bis 5 (Tabelle 2): | | | | | |
|---|---|---|---|---|---|
| | **Probe 1** | **Probe 2** | **Probe 3** | **Probe 4** | **Probe 5** |
| BPA (Gew.-%) | 59,28 | 83,36 | 58,45 | 99,93 | 99,96 |
| Phenol (Gew.-%) | 40,34 | 16,26 | 41,49 | <0,01 | <0,01 |
| Nebenprodukte (Gew.-%) | 0,38 | 0,38 | 0,06 | 0,07 | 0,04 |

Nebenprodukte in obiger Tabelle 2 bedeutet den Anteil in Gew.-% von bei der Herstellung von BPA typischerweise anfallenden Nebenprodukten, z.B. o,p-BPA, Dimethylxanthen, Indanole, Chromane, 4-Isopropenylphenol und dessen Oligomere und unbekannte Bestandteile.

### Durchführung der Beispiele 1-6 und der Vergleichsbeispiele 1-3:

In einem 500 ml Dreihalskolben mit Rührer, Innenthermometer und Vigreuxkolonne (30 cm, verspiegelt) mit Brücke wurden 113,54 g (0,530 mol) Diphenylcarbonat und eine entsprechende Menge der untersuchten Proben 1-8 eingewogen, so dass in der Mischung 114,15 g (0,500 mol) Bisphenol A enthalten waren. Die Apparatur wurde durch Anlegen von Vakuum und Spülen mit Stickstoff (3 mal) vom Luftsauerstoff befreit und das Gemisch auf 150°C aufgeheizt. Jetzt wurden 4 x 10⁻³ mol-% Tetraphenylphosphonium-Phenolat bezogen auf Bisphenol A und die in Tabelle 3 angegebene Menge Natriumphenolat bezogen auf Bisphenol als Feststoffe zugegeben. Das entstehende Phenol wurde bei 100 mbar abdestilliert. Gleichzeitig wurde die Temperatur bis auf 250°C gesteigert. Nun wurde das Vakuum stufenweise bis auf 1 mbar verbessert und die Temperatur auf 260°C erhöht. Anschließend wurde die Temperatur auf 300°C erhöht und bei 0,1 mbar 1,5 Stunden gerührt. Man erhielt ein farbhelles lösungsmittelfreies Polycarbonat, dessen Eigenschaften in Tabelle 3 aufgeführt sind.

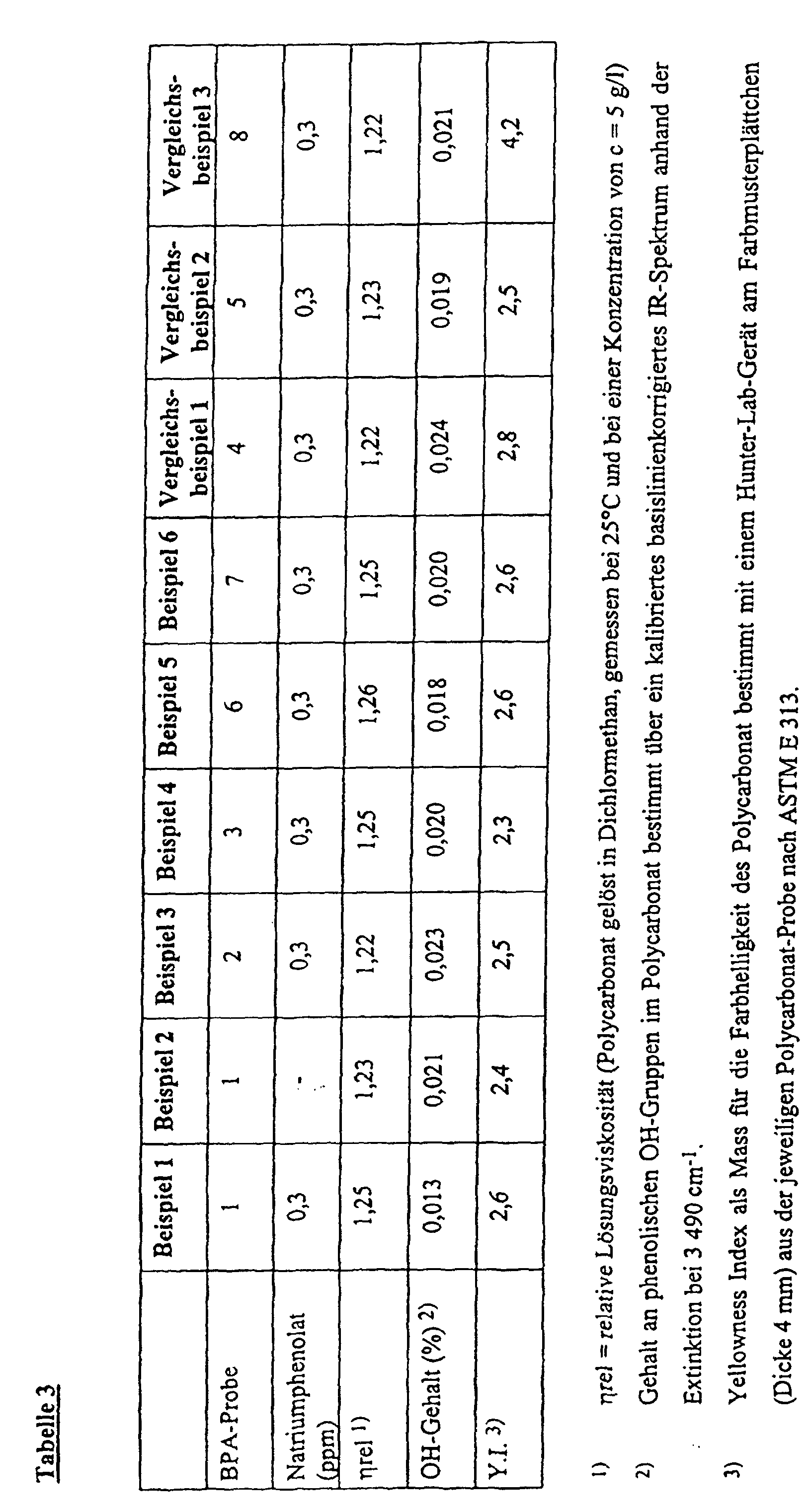

## Patentansprüche

1. Verfahren zur Herstellung von Polycarbonat durch Umesterung von Kohlensäureestern mit Dihydroxyverbindungen, **dadurch gekennzeichnet, dass** 10 bis 100 mol-% der insgesamt eingesetzten molaren Menge an Dihydroxyverbindungen Bisphenol A ist und dass das Bisphenol A als Mischung aus Bisphenol A und Phenol eingesetzt wird, wobei der Anteil des Phenols in der Mischung aus Bisphenol A und Phenol 5 bis 85 Gew.-%, bezogen auf die Masse des Bisphenol A, ist.

2. Verfahren gemäß einem der Ansprüche 1, wobei der Anteil des Phenols in der Mischung aus Bisphenol A und Phenol 10 bis 70 Gew.-%, bezogen auf die Masse des Bisphenol A, ist.

3. Verfahren gemäß einem der Ansprüche 1 bis 2, wobei die Mischung aus Bisphenol A und Phenol bei der Herstellung von Bisphenol A typischerweise entstehende Nebenprodukte enthält.

4. Verfahren gemäß Anspruch 3, wobei die Nebenprodukte in der Mischung aus Bisphenol A und Phenol in einer Menge von 0,05 bis 1,0 Gew.-%, bezogen auf Bisphenol A enthalten sind.

5. Verfahren gemäß Anspruch 4, wobei die Nebenprodukte in der Mischung aus Bisphenol A und Phenol in einer Menge von 0,1 bis 0,5 Gew.-%, bezogen auf Bisphenol A enthalten sind.

## Claims

1. Process for producing polycarbonate by transesterification of carbonic esters with dihydroxyl compounds, **characterised in that** 10 to 100 mol% of the molar quantity of dihydroxyl compounds used in total is bisphenol A and that bisphenol A is used as a mixture of bisphenol A and phenol, wherein the content of phenol in the mixture of bisphenol A and phenol is 5 to 85 wt.%, based on the weight of bisphenol A.

2. Process according to claim 1, wherein the content of phenol in the mixture of bisphenol A and phenol is 10 to 70 wt.%, based on the weight of bisphenol A.

3. Process according to claim 1 or 2, wherein the mixture of bisphenol A and phenol contains secondary products typically formed during the production of bisphenol A.

4. Process according to claim 3, wherein the secondary products are present in the mixture of bisphenol A and phenol in a quantity of 0.05 to 1.0 wt.%, based on bisphenol A.

5. Process according to claim 4, wherein the secondary products are present in the mixture of bisphenol A and phenol in a quantity of 0.1 to 0.5 wt.%, based on bisphenol A.

## Revendications

1. Procédé de préparation de polycarbonate par transestérification d'esters d'acide carbonique avec des composés dihydroxylés, **caractérisé en ce que** 10 à 100% en mole de la quantité molaire utilisée au total de composés dihydroxylés sont du bisphénol A et que le bisphénol A est utilisé comme mélange de bisphénol A et de phénol, la part de phénol dans le mélange de bisphénol A et de phénol s'élevant à 5 à 85% en poids de la masse de bisphénol A.

2. Procédé selon la revendication 1, la proportion de phénol dans le mélange de bisphénol A et de phénol s'élevant à 10 à 70% en poids par rapport à la masse de bisphénol A.

3. Procédé selon l'une des revendications 1 à 2, le mélange de bisphénol A et de phénol contenant des sous-produits formés typiquement lors de la préparation de bisphénol A.

4. Procédé selon la revendication 3, les sous-produits étant contenus dans le mélange de bisphénol A et de phénol dans une quantité de 0,05 à 1,0 % en poids par rapport au bisphénol A.

5. Procédé selon la revendication 4, les sous-produits étant contenus dans le mélange de bisphénol A et de phénol dans une quantité de 0,1 à 0,5% en poids par rapport au bisphénol A.
